# EUROPEAN PATENT APPLICATION

(11) **EP 0 540 387 A2**
(43) Date of publication of application: **05.05.1993**
(21) Application number: 92402803.8
(22) Date of filing: 14.10.1992
(51) Int. Cl.: H04B 7/26, H01Q 3/26, H04Q 7/04

(54) **Cellular radio communication system with phased array antenne**

(30) Priority: 17.10.1991 DE 4134357
(71) Applicant: ALCATEL N.V., NL-1077 XX Amsterdam (NL); Alcatel SEL Aktiengesellschaft, D-70435 Stuttgart (DE)
(72) Inventor: Weis, Bernd X., W-7015 Korntal (DE)
(74) Representative: Pothet, Jean Rémy Emile Ludovic

(57) **Abstract**

s Communication systems, such as radiotelephone systems, allow only a limited number of subscribers. Cellular systems which use directional antennas both at the base stations and at the mobile stations do not make optimum use of the available frequencies. A communication system which uses phased array antennas at both the base stations and the mobile stations ensures a better utilization of a predetermined frequency range, suppresses multi-path effects, and is less sensitive to interference.

## Description

The present invention relates to a radio communication system as set forth in the preamble of claim 1 and to the associated stations as set forth in the preambles of claims 2 and 3.

Such a system and such stations are disclosed in EP 0 352 787. The directional antenna system shown therein consists of radiating elements for each of the six sectors.

The area to be served by public mobile-radio networks is frequently divided into cells. Each of these cells contains a base station which communicates with the mobile stations, e.g., by the TDMA technique. Neighboring cells use different frequencies. But cells that are a certain distance apart may use the same frequencies if certain rules are observed and if so-called sector antennas as described in EP 359 535 are employed. Such sector antennas are also known for the mobile units of such cellular radio telephone networks (EP 352 787).

It is the object of the invention to provide a communication system which utilizes the available frequencies even better than the known systems. This object is attained by a communication system with the combination of features set forth in claim 1, with the fixed stations according to claim 2, and with the mobile stations according to claim 3. The system uses phased array antennas, which, in conjunction with electronic control equipment, allow these stations to electronically scan the antenna beam within wide ranges.

The advantage of such antennas lies in the fact that a base station can communicate with, e.g., two mobile stations located far apart (great angular distance) on the same frequency and, provided that TDMA is used, on the same channel, without the two calls interfering with each other. Another advantage is that a call for which a highly directional antenna pattern is used needs less transmitting power than a nondirectional pattern. Therefore, transmitters with lower output power are needed for both the base stations and the mobile stations.

Furthermore, multipath is suppressed or even completely cancelled by the use of highly directional antennas, which also reduces the probability of channel interference.

Further advantageous features and aspects of the invention are defined in the subclaims.

One embodiment of the invention will now be explained with reference to the accompanying drawings, in which:
Fig. 1 shows the basic structure of a cellular communication system;
Fig. 2 is a block diagram showing the essential elements of a phased array antenna;
Fig. 3A shows a first arrangement of a phased array antenna, and
Fig. 3B shows a second arrangement of a phased array antenna.

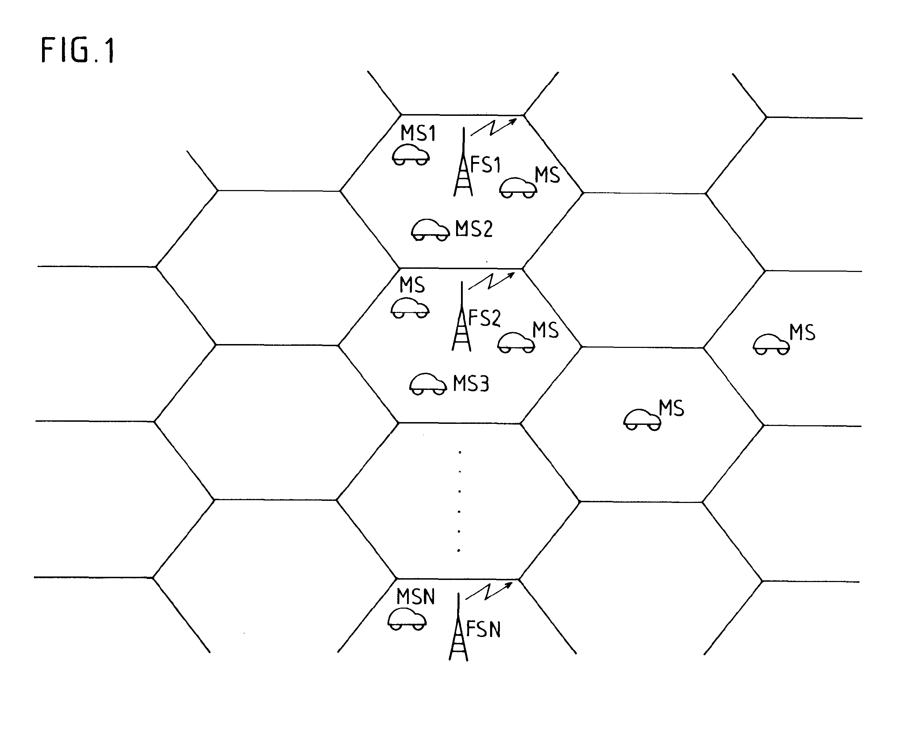

Fig. 1 shows a part of such a system, in which the cells are regular hexagons. If an area is covered with regular hexagons, the individual cells (hexagons) do not overlap. In three cells, base stations and mobile stations are shown. One cell contains a base station FS1, a second cell a base station FS2, and a further cell a base station FSN. In the cells, there are constantly changing numbers of mobile stations. The setting up and handling of a call between two mobile stations does not form part of the invention and, therefore, will not be described here. The GSM specification, for example, contains detailed instructions for the design of the signalling and transmission channels in a radio system. The base stations FS1, FS2, and FSN are equipped with directional antennas. There are conventional phased arrays which permit the generation of a scanning pencil beam with the aid of an electronic control device. When transmitting signals to the mobile station MS1, a base station equipped with such an antenna, e.g., the base station FS1,can point its beam directly to the mobile station MS1. On the other hand, mobile stations which are also equipped with phased array antennas can point their beams directly to the base station. In the case of a moving station, beam tracking must be ensured, i.e., the beam must remain aimed at the base station. This, too, can be accomplished by electronic means which are also known per se.

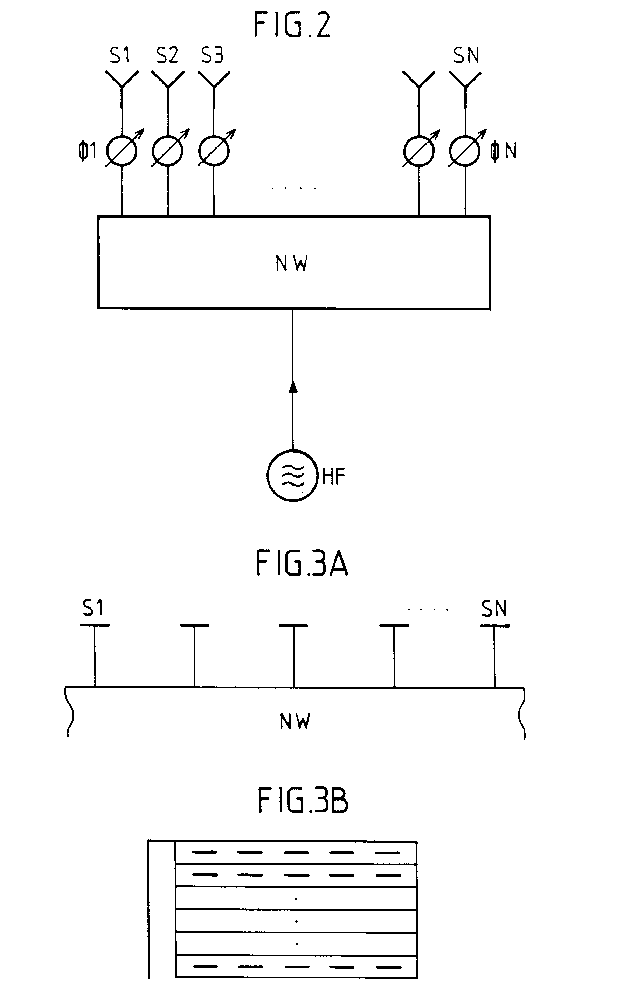

Fig. 2 shows the block diagram of a phased array antenna. N radiating elements are designated S1, S2, S3, ..., SN. They are connected to a network NW through phase shifters ϕ1 to ϕN, respectively. The network is supplied with radio-frequency energy from a radio-frequency source HF. In the network NW, e.g., a Butler matrix, the high-frequency energy is distributed to the individual radiating elements S1 through SN. The phase shifters ϕ1 through ϕN ensure that the antenna beam can be made to scan. They are conventional electronically controllable phase shifters with a resolution of 4 or 6 bits. The representatton of Fig. 2 gives no information about the spatial arrangement of the radiating elements. An example of such an arrangement is shown in Fig. 3.

Fig. 3Ashows a phased array antenna whose radiating elements are located on a straight line. Like reference characters are used to designate parts corresponding to those of Fig. 2. The radiating elements of a phased array can also be arranged in a planar array, as is shown in Fig. 3B. For short wavelengths, slotted wave-guide arrays are known.

With highly directional antennas, calls between base station and mobile station are difficult to set up. For call set-up, both the base station FS and the mobile station MS must be able to radiate omnidirectional patterns. This can be implemented in two ways. Firstly, both the base stations FS and the mobile stations MS, besides being equipped with the phased arrays, can be provided with omnidirectional antennas which only serve to establish a connection. Secondly, if the phased array used is of a suitable design, the array itself can be switched to omnidirectional radiation by suitable adjustment of the phase shifters.

The linear arrays shown in Figs. 3A and 3B are especially suitable for use with the base station, in which case three or six such arrays, for example, would hare to be evenly distributed around the antenna mast and cover one sector each.

Suited for both the base station and the mobile station are circular arrays, in which a plurality of like radiating elements are equally spaced on a circle. Depending of the phases of the currents flowing in the radiating elements, such a circular array acts either as an omnidirectionel antenna or as a directional antenna with adjustable direction of maximum radiation. The directivity of the antenna depends on the number of existing or effective radiating elements.

Such an array antenna can also be used in a simple manner as a direction-finding antenna, particularly with digital transmission, which is planned for most future mobile-radio networks. By measuring the arrival times of individual pulses at the various radiating elements (or at at least three of the radiating elements), transit-time differences and the angle of incidence of received signals can be determined.

Such antenna arrays and their use as omnidirectional antennas, directional antennas or direction-finding antennas are familiar to those skilled in the art. They were already described, for example, in the third edition of a standard work by H. Meinke and F.W. Grundlach, "Taschenbuch der Hochfrequenztechnik", 1968, in Chapters 29 (Peilantennen) to 32 (Kreisgrup- penantennen - Richtstrahler) of Part H (Antennen) (pages 575 - 587). Improvements that have been devised since then relate mainly to digitally adjustable phase shifters and to the computational evaluation of the direction-finding data. This is also familiar to any person skilled in the art.

To establish a connection, an omnidirectional radiation is then necessary from at least one end, which can be detected and whose direction can be determined at the other end. The reply can already be given with a directional radiation whose direction must then be determined at the first end. During the call, the direction finding is continuously repeated at both ends and used to correct the direction in which the antenna radiates. The same method can also be used when the mobile station crosses the boundary to the area of another base station (hand-off). In this case, the new direction can also be determined in advance and exchanged by signalling if in addition to the directions, the distance is known. The distance between base station and mobile station is frequently determined for other reasons. Thus, accurate position determination of the mobile station is possible at any time, and from this data, the directions of maximum radiation are determined for establishing a connection between the mobile station and another base station.

In the above-described communication system with phased array antennas, it is irrelevant whether communication is analog or digital and whether TDMA, FDMA or CDMA is employed. Each of these three methods permits the use of phased arrays. The use of such arrays also makes it possible for a base station to point beams of carriers of the same frequency to different moving stations without causing any interference. In this manner, the frequency range available for communication is utilized better than if only omnidirectional antennas were used.

It is advantageous, of course, if both the base stations and the mobile stations have antenna systems with adjustable directional pattern. But even the provision of only one end with such a system offers advantages over antenna systems with fixed directional pattern.

## Claims

1. A radio communication system comprising at least one base station (FS1,..., FS3) and at least one mobile station (MS1, ..., MSN) which both have a directional antenna system, characterized in that the directional antenna system consists of at least one phased array having at least one beam.

2. A base station (FS1, ..., FS3) for a radio communication system comprising a directional antenna system, characterized in that the directional antenna system consists of at least one phased array having at least one beam.

3. A mobile station (MS; MS1, ..., MSN) for a radio communication system comprising a directional antenna system, characterized in that the directional antenna system consists of at least one phased array having at least one beam.

4. A station as claimed in claim 2 or 3, characterized in that during reception, the phase and amplitude values at the radiating elements of the phased arrays are constantly measured, that from the measured values, the direction of the respective other station is determined, and that for transmission, the beam is moved to the direction determined.

5. A station as claimed in claim 2 or 3, characterized in that in addition, omnidirectional antennas. are provided.
